# EUROPÄISCHE PATENTSCHRIFT

(11) **EP 1 837 144 B1**
(45) Veröffentlichungstag und Bekanntmachung des Hinweises auf die Patenterteilung: **24.09.2008**
(21) Anmeldenummer: 06005781.7
(22) Anmeldetag: 21.03.2006
(51) Int. Cl.: B27D 5/00, B23Q 1/26, F16C 32/02

(54) **Führungsvorrichtung**
Guiding device
Dispositif de guidage

(43) Veröffentlichungstag der Anmeldung: 26.09.2007
(73) Patentinhaber: Brandt Kantentechnik GmbH, 32647 Lemgo (DE)
(72) Erfinder: Franz, Karl-Bernhard, 32657 Lemgo (DE)
(74) Vertreter: HOFFMANN EITLE

(56) Entgegenhaltungen:
- EP-A- 0 538 513
- DE-A1- 2 535 834
- FR-A- 2 713 120

## Beschreibung

### Technisches Gebiet

Die Erfindung betrifft eine Führungsvorrichtung zum tastenden Führen von Bearbeitungswerkzeugen oder Bearbeitungsaggregaten, mit einem ersten Grundkörper und einem zweiten Grundkörper, wobei einer der Grundkörper dazu ausgelegt ist, mit einem daran montierten Bearbeitungswerkzeug oder Bearbeitungsaggregat eine Tastbewegung auszuführen.

### Stand der Technik

Führungsvorrichtungen der eingangs genannten Art sind beispielsweise im Bereich der Bearbeitung plattenförmiger Werkstücke wie Möbelfronten, Arbeitsplatten und dergleichen seit langem bekannt.

So offenbart beispielsweise die EP 0 538 513 A eine Durchlaufmaschine zur Bearbeitung plattenförmiger Werkstücke im Bereich einer Schmalseite bzw. Kante. Typische Arbeitsschritte, die an den durchlaufenden plattenförmigen Werkstücken vorgenommen werden, sind beispielsweise das Auftragen von Leim, das Anlegen und Andrücken eines streifenförmigen Kantenmaterials oder das Kappen oder Bündigfräsen von Überständen des angeleimten Kantenmaterials. Zu diesem Zweck sind entlang der Durchlaufmaschine verschiedene Bearbeitungswerkzeuge oder Bearbeitungsaggregate angeordnet.

Die plattenförmigen Werkstücke werden auf einer Fördereinrichtung an den Bearbeitungswerkzeugen oder Bearbeitungsaggregaten entlang gefördert. Dabei können an den Werkstücken Lage- oder Abmessungstoleranzen auftreten. Um diese Toleranzen auszugleichen, sind die Bearbeitungswerkzeuge und Bearbeitungsaggregate durch Führungseinrichtungen der eingangs genannten Art tastend geführt, d. h. verschiebbar gelagert. Dabei wird die Istlage bzw. Abmessung des jeweiligen Werkstücks beispielsweise durch eine Tastrolle oder einen Tastschuh erfasst, die bzw. der für eine entsprechende Tastposition des Bearbeitungswerkzeugs oder Bearbeitungsaggregats sorgt.

Bei den Führungseinrichtungen handelt es sich üblicherweise um Linearlager mit Wälzelementen. Allerdings hat sich gezeigt, dass derartige Linearlager eine aufwändige Konstruktion besitzen und meist nur mit hohem Aufwand von spezialisierten Unternehmen zur Verfügung gestellt werden können. Ferner sind Linearlager verschmutzungsanfällig, was deren Lebensdauer beeinträchtigt.

### Darstellung der Erfindung

Es ist daher Aufgabe der vorliegenden Erfindung, eine Führungsvorrichtung der eingangs genannten Art bereitzustellen, die eine einfache Konstruktion besitzt und weniger anfällig gegenüber Verschmutzungen ist.

Diese Aufgabe wird erfindungsgemäß durch eine Führungsvorrichtung zum tastenden Führen von Bearbeitungswerkzeugen oder Bearbeitungsaggregaten nach Anspruch 1 gelöst. Besonders bevorzugte Ausführungsformen sind in den abhängigen Ansprüchen angegeben.

Der Erfindung liegt der Gedanke zugrunde, bei einer Führungsvorrichtung der eingangs genannten Art auf Wälzelemente verzichten zu können und statt dessen Schwenkelemente zur Erzielung einer Relativbewegung zwischen den Grundkörpern der Führungseinrichtung einzusetzen. Zu diesem Zweck ist erfindungsgemäß vorgesehen, dass die Führungsvorrichtung ferner mindestens ein Zugelement, das den ersten Grundkörper und den zweiten Grundkörper derart verbindet, dass es eine Zugkraft zwischen diesen übertragen kann, und mindestens zwei Stützelemente, die sich jeweils verschwenkbar an dem ersten Grundkörper und dem zweiten Grundkörper derart abstützen, dass sie eine Druckkraft zwischen diesen übertragen können, aufweist.

Auf diese Weise kann bei der erfindungsgemäßen Führungsvorrichtung auf Wälzelemente verzichtet werden, so dass sich eine einfache Konstruktion ergibt, die unempfindlich gegenüber Verschmutzungen ist und eine lange Lebensdauer besitzt. Die erfindungsgemäße Führungsvorrichtung ermöglicht zwar keine absolut lineare Tastbewegung, dies ist jedoch für die hier hauptsächlich angestrebten Anwendungsfälle ohne Bedeutung.

Bei der erfindungsgemäßen Vorrichtung werden die Zugelemente in aller Regel (d. h. abgesehen von unerwünscht auftretenden Kräften wie Zwangskräften etc.) ausschließlich Zugkräfte und die Stützelemente ausschließlich Druckkräfte übertragen, obgleich die Erfindung nicht hierauf beschränkt ist.

Gemäß einer Weiterbildung der vorliegenden Erfindung ist vorgesehen, dass der erste Grundkörper und der zweite Grundkörper jeweils Vertiefungen aufweisen, in denen sich die Stütz- und/oder Zugelemente abstützen. Auf diese Weise wird ermöglicht, dass die Stütz- bzw. Zugelemente sich sicher an den jeweiligen Grundkörpern abstützen können und nicht verrutschen, ohne dass die angestrebte Schwenkbewegung der Stütz- bzw. Zugelemente behindert wird oder aufwendige Bauteile erforderlich sind.

Um ein zwängungsfreies Verschwenken der jeweiligen Stützelemente und des mindestens einen Zugelements während einer Tastbewegung der Führungsvorrichtung zu ermöglichen, ist gemäß einer Weiterbildung der Erfindung vorgesehen, dass der Grund der Vertiefungen für die Stützelemente und der Grund der Vertiefungen für das mindestens eine Zugelement im wesentlichen auf einer Ebene angeordnet sind.

Die in den Grundkörpern gebildeten Vertiefungen können im Rahmen der vorliegenden Erfindung vielfältig ausgestaltet sein. Im Hinblick auf eine sichere Abstützung der Stütz- bzw. Zugelemente bei einfacherer Herstellung ist es jedoch bevorzugt, dass die Vertiefungen im Wesentlichen V-förmig ausgebildet sind. Alternativ oder zusätzlich ist gemäß der Erfindung vorgesehen, dass die Stütz- und/oder Zugelemente selbst jeweils zwei V-förmige Stütz- bzw. Zugabschnitte aufweisen. Hierdurch ergibt sich ein zwängungsfreier Punkt- bzw. Linienkontakt zwischen den Grundkörpern und den Stütz- bzw. Zugelementen, sodass die Stütz- bzw. Zugelemente besonders vorteilhaft als zwängungsfreie Schwenkelemente (ähnlich Pendelstützen) arbeiten können. Dabei ist es besonders bevorzugt, dass der V-Winkel der Stütz- bzw. Zugabschnitte jeweils kleiner ist als der V-Winkel der zugehörigen Vertiefungen. Dabei kann durch geeignete Abstimmung der V-Winkel aufeinander der jeweilige Schwenkwinkel der Stütz- bzw. Zugelemente und somit der Tastweg der gesamten Führungsvorrichtung eingestellt werden.

Das mindestens eine Zugelement kann im Rahmen der vorliegenden Erfindung auf unterschiedlichste Art und Weise ausgestaltet sein und beispielsweise auch eine Feder aufweisen oder sogar ausschließlich durch eine Feder gebildet sein. Bei einer anderen bevorzugten Ausführungsform weist das mindestens eine Zugelement zwei Zugabschnitte auf, die fest miteinander verbunden sind, beispielsweise mittels Schrauben.

Auch die Form und Ausgestaltung der Stützelemente ist im Rahmend er vorliegenden Erfindung nicht besonders beschränkt. Allerdings hat es sich im Hinblick auf eine einfache Herstellung und einen stabilen Aufbau der Führungsvorrichtung als vorteilhaft erwiesen, dass die Stützelemente stabförmig ausgebildet sind und bevorzugt einen Querschnitt besitzen, der im Wesentlichen einem Quadrat oder Parallelogramm entspricht. Bei den letztgenannten Querschnittsformen erhält man automatisch V-förmige Stützabschnitte, ohne dass eine separate Bearbeitung der Stützelemente erforderlich ist.

Schließlich ist auch die Form und Ausgestaltung der Grundkörper im Rahmen der vorliegenden Erfindung vielfältig variierbar. Bei vielen Anwendungsfällen werden einer oder beide Grundkörper im Wesentlichen flächig ausgebildet sein und Durchgangs- und Aufnahmebohrungen aufweisen. Gemäß einer Weiterbildung der vorliegenden Erfindung ist ferner vorgesehen, dass der erste Grundkörper und/oder der zweite Grundkörper eine Mehrzahl von Blechteilen aufweisen, die bevorzugt miteinander verschweißt sind. Hierdurch ergibt sich eine einfache und leichtgewichtige Konstruktion, die ohne aufwändige Mittel an die jeweiligen Anforderungen (beispielsweise auftretende Belastungen, Anschlussbild der jeweiligen Werkzeuge bzw. Aggregate, Maschinengeometrie etc.) angepasst werden können.

Gemäß einer weiteren Zielrichtung stellt die vorliegende Erfindung eine Bearbeitungsvorrichtung zur Bearbeitung plattenförmiger Werkstücke, insbesondere im Bereich einer Kante, bereit, die eine Führungsvorrichtung gemäß der vorliegenden Erfindung aufweist. Dabei ist an einem der Grundkörper der Führungsvorrichtung zumindest ein Bearbeitungswerkzeug oder Bearbeitungsaggregat montiert. Diese Konfiguration stellt einen besonders vorteilhaften Anwendungsfall der vorliegenden Erfindung dar und ermöglicht, dass das an der Führungsvorrichtung montierte Bearbeitungswerkzeug oder Bearbeitungsaggregat mit einfachen Mitteln eine präzise Tastbewegung ausführen kann. Dabei ist es besonders bevorzugt, dass der Grundkörper, an dem das Bearbeitungswerkzeug oder Bearbeitungsaggregat montiert ist, in einer Richtung vorgespannt ist, in der das Bearbeitungswerkzeug oder Bearbeitungsaggregat durch die Führungsvorrichtung tastend geführt ist. Auf diese Weise kann das Bearbeitungswerkzeug oder Bearbeitungsaggregat beispielsweise in eine standardmäßige Bearbeitungsposition vorgespannt sein, aus der es nur ausgelenkt wird (beispielsweise durch eine Tastrolle), wenn die Lage und/oder Geometrie des zu bearbeitenden Werkstücks von einer Solllage abweicht. Hierdurch ergibt sich auch bei Lage- und Abmessungstoleranzen der zu bearbeitenden Werkstücke eine präzise Bearbeitung derselben.

### Kurze Beschreibung der Zeichnungen

- Fig. 1: zeigt schematisch eine Perspektivansicht einer Ausführungsform der erfindungsgemäßen Führungsvorrichtung;
- Fig. 2: zeigt schematisch zwei Seitenansichten sowie eine Draufsicht der in Fig. 1 gezeigten Führungsvorrichtung;
- Fig. 3: zeigt schematisch zwei Seitenansichten sowie eine Draufsicht einer Ausführungsform der Bearbeitungsvorrichtung gemäß der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

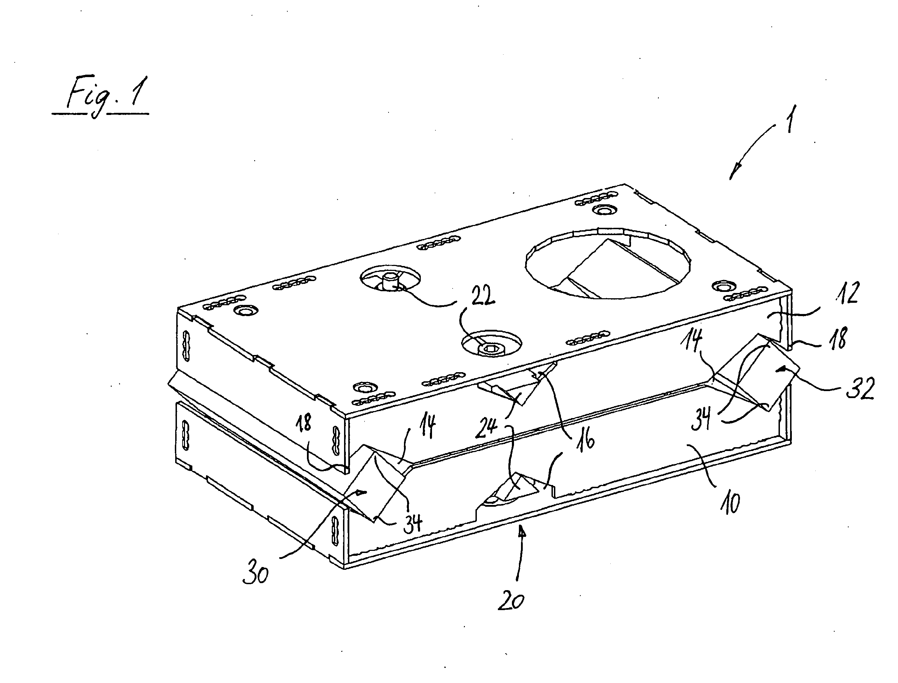

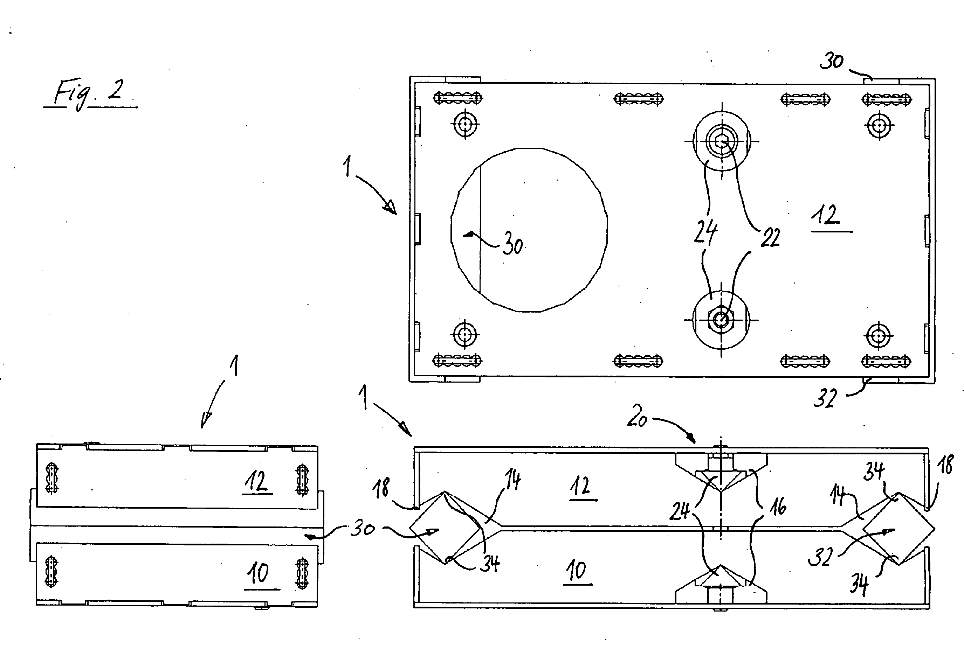

Eine Führungsvorrichtung 1 als bevorzugte Ausführungsform der vorliegenden Erfindung ist in Fig. 1 schematisch in einer Perspektivansicht und in Fig. 2 schematisch in zwei Seitenansichten sowie einer Draufsicht dargestellt. Die gezeigte Führungsvorrichtung 1 dient zum tastenden Führen von Bearbeitungswerkzeugen oder Bearbeitungsaggregaten, wie sie beispielsweise bei der Bearbeitung plattenförmiger Werkstücke, die zumindest teilweise aus Holz, Holzwerkstoffen oder dergleichen bestehen, häufig zum Einsatz kommen und auf die untenstehend noch näher eingegangen wird.

Die gezeigte Führungsvorrichtung 1 besitzt einen ersten Grundkörper 10 und einen zweiten Grundkörper 12, die beide kastenartig ausgebildet sind. Beide Grundkörper 10, 12 besitzen mehrere Durchgangsbohrungen, sodass sie beispielsweise mit einem Maschinentisch oder einem zu führenden Bearbeitungswerkzeug bzw. Bearbeitungsaggregat verbunden werden können.

Der erste Grundkörper 10 und der zweite Grundkörper 12 sind in der vorliegenden Ausführungsform jeweils durch eine Mehrzahl von Blechteilen gebildet, die miteinander verschweißt sind. Es ist jedoch zu beachten, dass die Grundkörper auch einstückig ausgebildet sein können, beispielsweise als gebogenes Blechteil, Gussteil, Massivteil oder dergleichen.

Zwischen den beiden Grundkörpern 10, 12 sind in der vorliegenden Ausführungsform zwei stabförmige Stützelemente 30, 32 und ein Zugelement 20 vorgesehen. Diese stützen sich jeweils in Vertiefungen 14 und 16 ab, die in dem ersten Grundkörper 10 und dem zweiten Grundkörper 12 gebildet sind. Auf diese Weise kann das Zugelement 20 eine Zugkraft zwischen dem ersten Grundkörper 10 und dem zweiten Grundkörper 12 übertragen, und die Stützelemente 30, 32 können jeweils eine Druckkraft zwischen dem ersten Grundkörper 10 und dem zweiten Grundkörper 12 übertragen.

Wie in der Seitenansicht in Fig. 2 am besten zu erkennen ist, sind die Vertiefungen 14, 16 im Wesentlichen V-förmig ausgebildet, wobei der Grund der Vertiefungen 14 für die Stützelemente 30, 32 und der Grund der Vertiefungen 16 für das Zugelement 20 im Wesentlichen auf einer Ebene angeordnet sind.

Das Zugelement 20 ist in der vorliegenden Ausführungsform durch zwei stabförmige Zugabschnitte 24 gebildet, die miteinander durch zwei Schrauben 22 verbunden sind. Die Zugabschnitte 24 sind jeweils V-förmig ausgebildet, wobei der V-Winkel der Zugabschnitte 24 kleiner ist als der V-Winkel der zugehörigen Vertiefungen 16.

Die Stützelemente 30, 32 sind in der vorliegenden Ausführungsform stabförmig ausgebildet und besitzen einen im Wesentlichen quadratischen Querschnitt. Auf diese Weise bilden zwei gegenüberliegende Ecken des quadratischen Querschnitts jeweils einen V-förmigen Stützabschnitt 34, der sich in der entsprechenden Vertiefung 14 abstützt. Dabei ist auch in diesem Falle der V-Winkel der Stützabschnitte 34 kleiner als der V-Winkel der zugehörigen Vertiefungen 14. Es ist jedoch zu beachten, dass der Querschnitt der Stützelemente 30, 32 prinzipiell beliebig ausgestaltet und beispielsweise auch nach Art eines Parallelogramms oder dergleichen gebildet sein kann.

Dabei können die Stützelemente 30, 32 Nuten aufweisen, in denen die Spitzen der V-förmigen Vertiefungen 14 zum Liegen kommen. Hierdurch wird auf einfache und wirksame Weise erreicht, dass der erste und der zweite Grundkörper 10, 12 in einer Richtung quer zur Tastrichtung unverschieblich in Bezug zueinander sind. Allerdings sind hierfür auch andere Konstruktionen möglich, wie beispielsweise seitlich angeordnete Sichungsschrauben.

Die beschriebene Konstruktion der erfindungsgemäßen Führungsvorrichtungen 10 ermöglicht, dass die Grundkörper 10 und 12 in Bezug zueinander eine sicher geführte Tastbewegung ausführen können. Während der Tastbewegung führen die Stützelemente 30, 32 und das Zugelement 20 jeweils eine Schwenkbewegung aus, wobei der Tastweg über den möglichen Schwenkwinkel (d. h. über das Verhältnis der V-Winkel der Vertiefungen 14, 16 bzw. der Stütz- bzw. Zugabschnitte 24, 34) definiert werden kann. Alternativ ist es ebenso möglich, wie in der vorliegenden Ausführungsform zusätzliche Anschläge 18 vorzusehen, welche den Tastweg bzw. Schwenkwinkel im gewünschten Maß begrenzen.

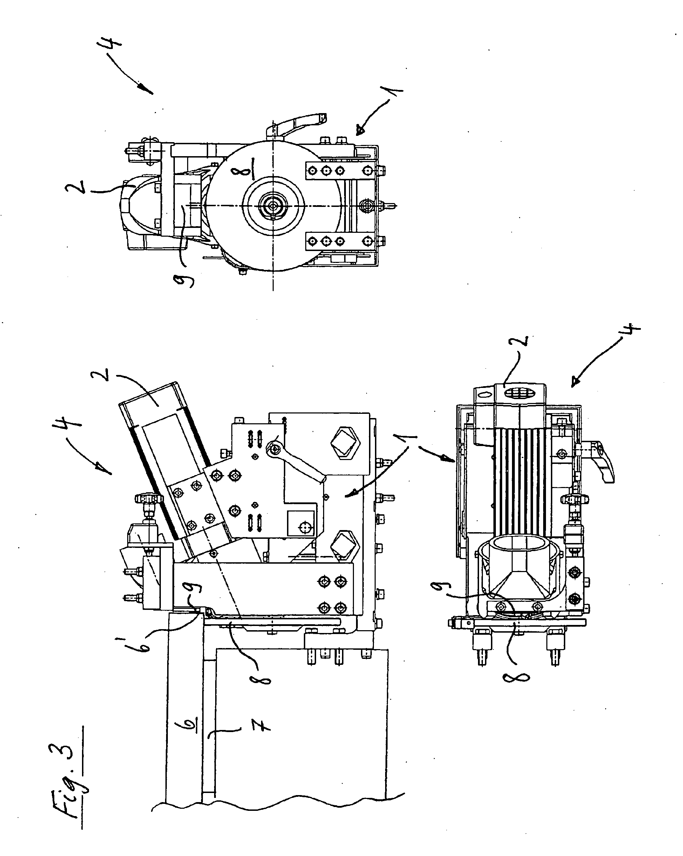

Eine Bearbeitungsvorrichtung 4 als bevorzugte Ausführungsform der vorliegenden Erfindung ist in Fig. 3 schematisch in zwei Seitenansichten sowie einer Draufsicht gezeigt. Die Bearbeitungsvorrichtung 4 dient zur Bearbeitung plattenförmiger Werkstücke 6, von denen eines schematisch in einer der Seitenansichten in Fig. 3 gezeigt ist. Bei den plattenförmigen Werkstücken 6 kann es sich beispielsweise um Möbelfronten, Arbeitsplatten oder dergleichen handeln, die zumindest teilweise aus Holz, Holzwerkstoff oder auch anderen Verbundwerkstoffen und dergleichen bestehen. Bei derartigen plattenförmigen Werkstücken 6 wird häufig im Bereich einer Schmalseite nachträglich eine Kante 6' angebracht (in der vorliegenden Ausführungsform angeleimt) und nachbearbeitet. Bei der gezeigten Bearbeitungsvorrichtung 4 kann es sich somit um eine Kantenanleimvorrichtung handeln.

Die Bearbeitungsvorrichtung 4 umfasst in der vorliegenden Ausführungsform zunächst eine in einer Seitenansicht in Fig. 3 gezeigte Fördereinrichtung 7, beispielsweise in Form eines Riemenförderers, der auf einem nicht näher bezeichneten Maschinenbett läuft. An dem Maschinenbett ist eine Führungsvorrichtung 1 gemäß der vorliegenden Erfindung angebracht, die wiederum ein Bearbeitungsaggregat 2 trägt, das an einem der Grundkörper 12 der Führungsvorrichtung 1 montiert ist. Bei dem Bearbeitungsaggregat handelt es sich in der vorliegenden Ausführungsform um ein Bündigfräsaggregat, das dazu eingesetzt wird, einen Überstand einer an das plattenförmige Werkstück 6 angeleimten Kante abzufräsen. Allerdings kann es sich hierbei auch um ein einfaches Werkzeug handeln, wie beispielsweise eine Ziehklinge, oder um andersartige Bearbeitungsaggregate, wie beispielsweise eine Leimauftragvorrichtung oder eine so genannte Druckzone, d. h. eine Vorrichtung zum Andrücken eines angeleimten Kantenmaterials.

Mit dem Bündigfräsaggregat 2 ist ferner eine Tastrolle 8 verbunden, auf der das plattenförmige Werkstück 6 während seines Durchlaufs durch die Bearbeitungsvorrichtung 4 läuft, wobei die Tastrolle 8 (bzw. Tastschuh oder dergleichen) dafür sorgt, dass das Bündigfräsaggregat über eine nicht näher gezeigte Vertikalführungsvorrichtung in vertikaler Richtung an die tatsächliche Position des plattenförmigen Werkstücks 6 angepasst werden kann.

Darüber hinaus weist die Bearbeitungsvorrichtung 4 einen Anschlag 9 auf, der dazu vorgesehen ist, mit der zu bearbeitenden Kante 6' des plattenförmigen Werkstücks 6 in Kontakt zu kommen und auf diese Weise für eine genaue horizontale Positionierung des Bündigfräsaggregats 2 zu sorgen, welche an die tatsächlichen Abmessungen bzw. die tatsächliche Lage des-plattenförmigen Werkstücks 6 angepasst ist. Um stets für ein Anliegen des Anschlages 9 an der jeweiligen Kante 6' zu sorgen, ist der Grundkörper 12, an dem das Bündigfräsaggregat 2 montiert ist, in einer Richtung hin zu dem plattenförmigen Werkstück 6 (d. h. in der Tastrichtung) vorgespannt, beispielsweise mittels einer Feder oder dergleichen. Bei diesem Aufbau ermöglicht die erfindungsgemäße Führungsvorrichtung, dass mit einfachsten Mitteln eine verschmutzungsunempfindliche, tastende Führung des Bündigfräsaggregats in horizontaler Richtung erreicht werden kann, sodass Abmessungs- oder Lagetoleranzen der durch die Vorrichtung hindurchlaufenden, plattenförmigen Werkstücke 6 ausgeglichen werden können.

## Patentansprüche

1. Führungsvorrichtung (1) zum tastenden Führen von Bearbeitungswerkzeugen oder Bearbeitungsaggregaten (2), mit
einem ersten Grundkörper (10) und einem zweiten Grundkörper (12), wobei einer der Grundkörper (12) dazu ausgelegt ist, mit einem daran montierten Bearbeitungswerkzeug oder Bearbeitungsaggregat (2) eine Tastbewegung auszuführen,
**dadurch gekennzeichnet, dass** die Führungsvorrichtung (1) ferner aufweist:
mindestens ein Zugelement (20), das den ersten Grundkörper (10) und den zweiten Grundkörper (12) derart verbindet, dass es eine Zugkraft zwischen diesen übertragen kann, und
mindestens zwei Stützelemente (30, 32), die sich jeweils verschwenkbar an dem ersten Grundkörper (10) und dem zweiten Grundkörper (12) derart abstützen, dass sie eine Druckkraft zwischen diesen übertragen können.

2. Führungsvorrichtung nach Anspruch 1, **dadurch gekennzeichnet, dass** der erste Grundkörper (10) und der zweite Grundkörper (12) jeweils Vertiefungen (14, 16) aufweisen, in denen sich die Stütz- und/oder Zugelemente abstützen.

3. Führungsvorrichtung nach Anspruch 2, **dadurch gekennzeichnet, dass** der Grund der Vertiefungen (14) für die Stützelemente (30, 32) und der Grund der Vertiefungen (16) für das mindestens eine Zugelement (20) im wesentlichen auf einer Ebene angeordnet sind.

4. Führungsvorrichtung nach Anspruch 2 oder 3, **dadurch gekennzeichnet, dass** die Vertiefungen (14, 16) im wesentlichen V-förmig ausgebildet sind.

5. Führungsvorrichtung nach einem der vorhergehenden Ansprüche, **dadurch gekennzeichnet, dass** die Stütz- und/oder Zugelemente (20, 30, 32) jeweils zwei V-förmige Stütz- bzw. Zugabschnitte (24, 34) aufweisen.

6. Führungsvorrichtung nach Anspruch 5, **dadurch gekennzeichnet, dass** der V-Winkel der Stütz- bzw. Zugabschnitte (24, 34) jeweils kleiner ist als der V-Winkel der zugehörigen Vertiefungen (14, 16).

7. Führungsvorrichtung nach einem der vorhergehenden Ansprüche, **dadurch gekennzeichnet, dass** das mindestens eine Zugelement (20) zwei Zugabschnitte (24) ausweist, die fest miteinander verbunden sind, bevorzugt mittels Schrauben (22).

8. Führungsvorrichtung nach einem der vorhergehenden Ansprüche, **dadurch gekennzeichnet, dass** die Stützelemente (30, 32) stabförmig ausgebildet sind und bevorzugt einen Querschnitt besitzen, der im wesentlichen einem Quadrat oder Parallelogramm entspricht.

9. Führungsvorrichtung nach einem der vorhergehenden Ansprüche, **dadurch gekennzeichnet, dass** das mindestens eine Zugelement eine Feder aufweist, die bevorzugt vorgespannt ist.

10. Führungsvorrichtung nach einem der vorhergehenden Ansprüche, **dadurch gekennzeichnet, dass** der erste Grundkörper (10) und/oder der zweite Grundkörper (12) eine Mehrzahl von Blechteilen aufweisen, die bevorzugt miteinander verschweißt sind.

11. Führungsvorrichtung nach einem der vorhergehenden Ansprüche, **dadurch gekennzeichnet, dass** der erste und der zweite Grundkörper (10, 12) in einer Richtung quer zur Tastrichtung unverschieblich in Bezug zueinander sind.

12. Bearbeitungsvorrichtung (4) zur Bearbeitung plattenförmiger Werkstücke (6), insbesondere im Bereich einer Kante (6'), mit
einer Führungsvorrichtung (1) nach einem der vorhergehenden Ansprüche, und
einem Bearbeitungswerkzeug oder Bearbeitungsaggregat (2), das an einem der Grundkörper (12) der Führungsvorrichtung montiert ist.

13. Bearbeitungsvorrichtung nach Anspruch 12, **dadurch gekennzeichnet, dass** der Grundkörper (12), an dem das Bearbeitungswerkzeug oder Bearbeitungsaggregat (2) montiert ist, in einer Richtung vorgespannt ist, in der das Bearbeitungswerkzeug oder Bearbeitungsaggregat (2) durch die Führungsvorrichtung (1) tastend geführt ist.

## Claims

1. Guide device (1) for guiding processing tools or processing units (2) by touch, having
a first base body (10) and a second base body (12), one of the base bodies (12) being designed to perform a touching movement with a processing tool or processing unit (2) mounted thereon,
**characterised in that** the guide device (1) further has:
at least one traction element (20) which connects the first base body (10) and the second base body (12) in such a way that it can transmit a traction force between the latter, and
at least two supporting elements (30, 32) which are in each case pivotably supported on the first base body (10) and the second base body (12) in such a way that they can transmit a compression force between the latter.

2. Guide device according to claim 1, **characterised in that** the first base body (10) and the second base body (12) in each case have recesses (14, 16) in which are supported the supporting and/or traction elements.

3. Guide device according to claim 2, **characterised in that** the bottom of the recesses (14) for the supporting elements (30, 32) and the bottom of the recesses (16) for the at least one traction element (20) are arranged substantially in one plane.

4. Guide device according to claim 2 or 3, **characterised in that** the recesses (14, 16) are substantially V-shaped.

5. Guide device according to any of the preceding claims, **characterised in that** the supporting and/or traction elements (20, 30, 32) in each case have two V-shaped supporting or traction sections (24, 34).

6. Guide device according to claim 5, **characterised in that** the V-angle of the supporting and traction sections (24, 34) is in each case smaller than the V-angle of the associated recesses (14, 16).

7. Guide device according to any of the preceding claims, **characterised in that** the at least one traction element (20) has two traction sections (24) which are rigidly connected to each other, preferably using bolts (22).

8. Guide device according to any of the preceding claims, **characterised in that** the supporting elements (30, 32) are rod-shaped and preferably have a cross-section which substantially corresponds to a square or parallelogram.

9. Guide device according to any of the preceding claims, **characterised in that** the at least one traction element has a spring which is preferably pretensioned.

10. Guide device according to any of the preceding claims, **characterised in that** the first base body (10) and/or the second base body (12) have a plurality of sheet metal parts which are preferably welded to each other.

11. Guide device according to any of the preceding claims, **characterised in that** the first and the second base body (10, 12) are non-displaceable in relation to each other in a direction transversely to the direction of touching.

12. Processing device (4) for processing board- or platelike work pieces (6), in particular in the region of an edge (6'), having
a guide device (1) according to any of the preceding claims, and
a processing tool or processing unit (2) which is mounted on one of the base bodies (12) of the guide device.

13. Processing device according to claim 12, **characterised in that** the base body (12) on which the processing tool or processing unit (2) is mounted is biased in a direction in which the processing tool or processing unit (2) is guided by touch by the guide device (1).

## Revendications

1. Dispositif de guidage (1) pour le guidage par palpation d'outils d'usinage ou de groupes d'usinage (2), avec un premier corps de base (10) et un deuxième corps de base (12), l'un des corps de base (12) étant conçu pour exécuter un mouvement de palpation avec un outil d'usinage ou un groupe d'usinage (2) monté dessus,
**caractérisé par le fait que** le dispositif de guidage (1) comporte en plus :
- au moins un élément de traction (20) qui relie le premier corps de base (10) et le deuxième corps de base (12) de telle sorte qu'il peut transmettre une force de traction entre ceux-ci, et
- au moins deux éléments d'appui (30, 32) qui s'appuient respectivement pivotants sur le premier corps de base (10) et sur le deuxième corps de base (12) de telle sorte qu'ils peuvent transmettre une force de pression entre ceux-ci.

2. Dispositif de guidage selon la revendication 1, **caractérisé par le fait que** le premier corps de base (10) et le deuxième corps de base (12) comportent chacun des creux (14, 16) dans lesquels les éléments d'appui et/ou de traction s'appuient.

3. Dispositif de guidage selon la revendication 2, **caractérisé par le fait que** le fond des creux (14) pour les éléments d'appui (30, 32) et le fond des creux (16) pour l'au moins un élément de traction (20) sont agencés globalement dans un plan.

4. Dispositif de guidage selon la revendication 2 ou 3, **caractérisé par le fait que** les creux (14, 16) sont conçus globalement en forme de V.

5. Dispositif de guidage selon l'une des revendications précédentes, **caractérisé par le fait que** les éléments d'appui et/ou de traction (20, 30, 32) comportent chacun deux tronçons d'appui respectivement de traction (24, 34) en forme de V.

6. Dispositif de guidage selon la revendication 5, **caractérisé par le fait que** l'angle de V des tronçons d'appui et de traction (24, 34) est à chaque fois plus petit que l'angle de V des creux associés (14, 16).

7. Dispositif de guidage selon l'une des revendications précédentes, **caractérisé par le fait que** l'au moins un élément de traction (20) comporte deux tronçons de traction (24) qui sont assemblés de manière fixe, de préférence au moyen de vis (22).

8. Dispositif de guidage selon l'une des revendications précédentes, **caractérisé par le fait que** les éléments d'appui (30, 32) sont conçus en forme de barre et ont de préférence une section transversale qui correspond globalement à un carré ou à un parallélogramme.

9. Dispositif de guidage selon l'une des revendications précédentes, **caractérisé par le fait que** l'au moins un élément de traction comporte un ressort qui est de préférence précontraint.

10. Dispositif de guidage selon l'une des revendications précédentes, **caractérisé par le fait que** le premier corps de base (10) et/ou le deuxième corps de base (12) comporte une multiplicité de pièces de tôle qui sont de préférence soudées entre elles.

11. Dispositif de guidage selon l'une des revendications précédentes, **caractérisé par le fait que** le premier et le deuxième corps de base (10, 12) sont non translatables l'un par rapport à l'autre dans une direction transversale à la direction de palpation.

12. Dispositif d'usinage (4) pour l'usinage de pièces en forme de plaque (6), notamment dans la zone d'une arête (6'), avec
- un dispositif de guidage (1) selon l'une des revendications précédentes, et
- un outil d'usinage ou un groupe d'usinage (2) qui est monté sur l'un des corps de base (12) du dispositif de guidage.

13. Dispositif d'usinage selon la revendication 12, **caractérisé par le fait que** le corps de base (12) sur lequel l'outil d'usinage ou le groupe d'usinage (2) est monté est précontraint dans une direction dans laquelle l'outil d'usinage ou le groupe d'usinage (2) est guidé par palpation par le dispositif de guidage (1).
